# EUROPEAN PATENT SPECIFICATION

(11) **EP 3 287 252 B1**
(45) Date of publication and mention of the grant of the patent: **28.08.2019**
(21) Application number: 17187634.5
(22) Date of filing: 24.08.2017
(51) Int. Cl.: B29C 45/83

(54) **INJECTION MOLDING MACHINE**
SPRITZGIESSMASCHINE
MACHINE DE MOULAGE À INJECTION

(30) Priority: 26.08.2016 JP 2016166241
(43) Date of publication of application: 28.02.2018
(73) Proprietor: Sumitomo Heavy Industries, Ltd., Tokyo 141-6025 (JP)
(72) Inventor: MORIYA, Tomohiro, Chiba 263-0001 (JP)
(74) Representative: Louis Pöhlau Lohrentz

(56) References cited:
- EP-A1- 2 705 940
- EP-A1- 2 774 742
- WO-A1-2007/134961
- AT-A4- 505 659
- DE-A1-102008 009 943
- JP-A- H05 345 339
- JP-A- H11 320 643
- JP-A- 2000 190 362
- US-A1- 2014 227 381
- US-B2- 6 659 753

## Description

### BACKGROUND OF THE INVENTION

### Field of the Invention

The present invention relates to an injection molding machine.

### Description of Related Art

International Publication No. WO 2005/037519 describes an electric injection molding machine which includes a driven portion, an electric motor for operating the driven portion, and a movement direction conversion portion which is disposed between the electric motor and the driven portion and converts a rotary motion of a rotation generated by driving the electric motor into a linear motion.

An injection molding machine includes a tubular rotating member and a drive shaft which is disposed on an inner peripheral side of the rotating member and rotates and moves linearly by a rotary motion of the rotating member. For example, the drive shaft is splined to the rotating member.

In the related art, a lubricant which lubricates the drive shaft and the rotating member leaks out from the rotating member, and a large amount of lubricant is used. WO 2007/134961 A1, DE 10 2008 009943 A1 and JP H05 345339 A disclose each an injection molding machine comprising a tubular rotating member and a drive shaft which is disposed on an inner peripheral side of the rotating member wherein lubricant is provided inside of the tubular rotating member. US 6,659,753 B2 is directed to an injection unit of an injection molding machine. EP 2 705 940 A1 is directed to an injection molding machine.

### SUMMARY OF THE INVENTION

The present invention is made in consideration of the above-described problem, and a main object thereof is to provide an injection molding machine which can reduce an amount of a lubricant used to lubricate a drive shaft and a rotating member.

In order to achieve to the above-described obj ect, according to the present invention, there is provided an injection molding machine in accordance with the subject-matter of claim 1. Further embodiments of the invention are defined by the features of the dependent claims.

According to an aspect of the present invention, an injection molding machine which can reduce an amount of a lubricant used to lubricate the drive shaft and the rotating member is provided.

### BRIEF DESCRIPTION OF THE DRAWINGS

Fig. 1 is a view showing a state when a mold opening of an injection molding machine according an embodiment is completed.
Fig. 2 is a view showing a state when a mold of the injection molding machine according the embodiment is clamped.
Fig. 3 is a view showing a state when filling is completed by an injection unit according the embodiment.
Fig. 4 is a view showing a state when plasticizing is completed by the injection unit according the embodiment.
Fig. 5 is an enlarged view of a portion in Fig. 3.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

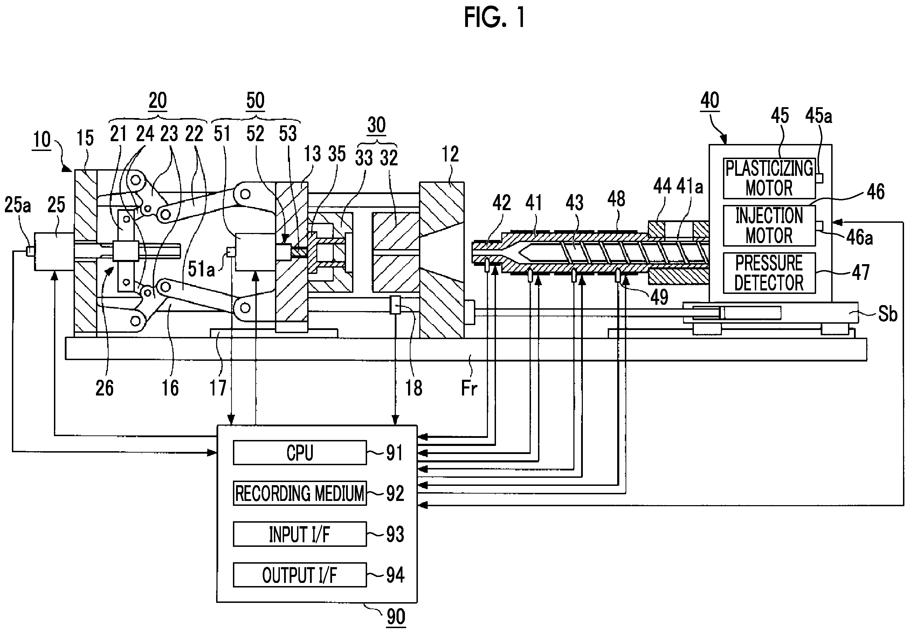

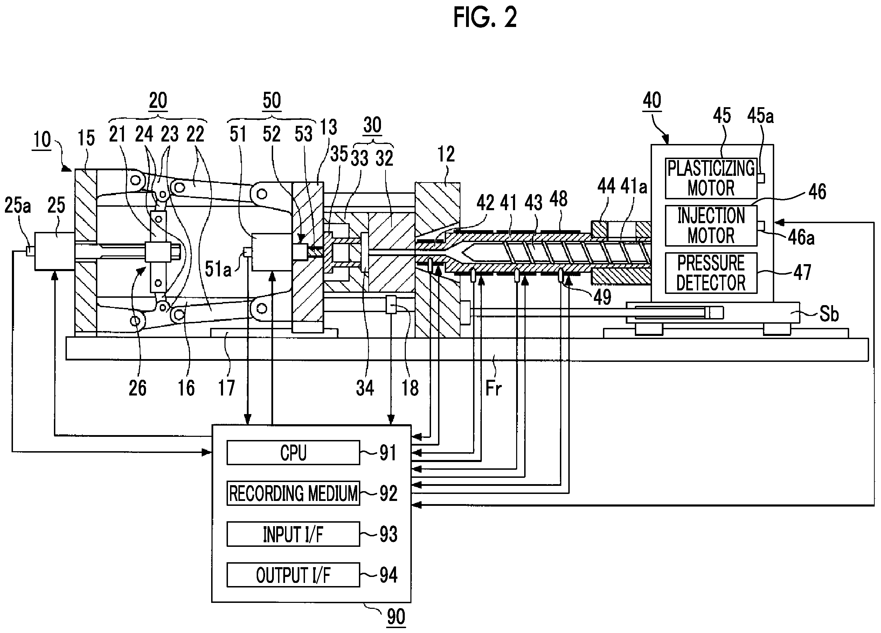

Fig. 1 is a view showing a state where a mold opening of an injection molding machine according an embodiment is completed. Fig. 2 is a view showing a state when a mold of the injection molding machine according the embodiment is clamped. As shown in Figs. 1 and 2, the injection molding machines include a frame Fr, a mold clamping unit 10, an injection unit 40, an ejector unit 50, and a controller 90.

First, the mold clamping unit 10 and the ejector unit 50 will be described. In the descriptions of the mold clamping unit 10 and the ejector unit 50, a movement direction (right direction in Figs. 1 and 2) of a movable platen 13 when a mold is closed is defined as a front side, and a movement direction (left direction in Figs. 1 and 2) of the movable platen 13 when the mold is open is defined as a rear side.

The mold clamping unit 10 performs closing, clamping, and opening of a mold unit 30. For example, the mold clamping unit 10 is a horizontal type clamping unit and mold opening and closing directions are a horizontal direction. The mold clamping unit 10 includes a stationary platen 12, the movable platen 13, a toggle support 15, a tie bar 16, a toggle mechanism 20, a mold clamping motor 25, and a motion conversion mechanism 26.

The stationary platen 12 is fixed to the frame Fr. A stationary mold 32 is attached to a surface of the stationary platen 12 facing the movable platen 13.

The movable platen 13 is movable in the mold opening and closing directions with respect to the frame Fr. A guide 17 which guides the movable platen 13 is placed on the frame Fr. A movable mold 33 is attached to a surface of the movable platen 13 facing the stationary platen 12.

The movable platen 13 moves forward or backward with respect to the stationary platen 12, and thus, opening, clamping, and closing of the mold are performed. The mold unit 30 is configured of the stationary mold 32 and the movable mold 33.

The toggle support 15 is connected so as to be separated from the stationary platen 12, and is placed to be movable on the frame Fr in mold opening and closing directions. In addition, the toggle support 15 may be movable along a guide which is placed on the frame Fr. The guide of the toggle support 15 may be also used as the guide 17 of the movable platen 13.

In addition, in the present embodiment, the stationary platen 12 is fixed to the frame Fr, and the toggle support 15 is movable in the mold opening and closing directions with respect to the frame Fr. However, the toggle support 15 may be fixed to the frame Fr, and the stationary platen 12 may be movable in the mold opening and closing directions with respect to the frame Fr.

The stationary platen 12 and the toggle support 15 are connected to each other at intervals by the tie bar 16. A plurality of tie bars 16 may be used. The tie bars 16 are parallel in the mold opening and closing directions and extend according to a mold clamping force. A mold clamping force detector 18 is provided in at least one tie bar 16. The mold clamping force detector 18 detects the mold clamping force by detecting strain of the tie bar 16 and sends signals indicating detection results to the controller 90.

In addition, the mold clamping force detector 18 is not limited to a strain gauge type detector, and may be a piezoelectric type detector, a capacitance type detector, a hydraulic type detector, an electromagnetic type detector, or the like, and the attachment position of the mold clamping force detector 18 is also not limited to the tie bar 16.

The toggle mechanism 20 is disposed between the movable platen 13 and the toggle support 15 and moves the movable platen 13 in the mold opening and closing directions with respect to the toggle support 15. The toggle mechanism 20 is configured of a crosshead 21, a pair of link groups, or the like. Each link group includes a first link 22 and a second link 23 which is bendably/strechably connected to each other by pins or the like. The first link 22 is attached to the movable platen 13 so as to be oscillated by pins or like and the second link 23 is attached to the toggle support 15 so as to be oscillated by pins or the like. The second link 23 is attached to the crosshead 21 via a third link 24. If the crosshead 21 moves forward or backward with respect to the toggle support 15, the first link 22 and the second link 23 are bent and stretched and the movable plate 13 moves forward or backward with respect to the toggle support 15.

In addition, the configuration of the toggle mechanism 20 is not limited to the configuration shown in Figs. 1 and 2. For example, in Figs. 1 and 2, the number of nodes of each link group is five. However, the number of nodes may be four, and one end portion of the third link 24 may be connected to a node between the first link 22 and the second link 23.

The mold clamping motor 25 is attached to the toggle support 15 and operates the toggle mechanism 20. The mold clamping motor 25 moves the crosshead 21 forward or backward with respect to the toggle support 15, and thus, the first links 22 and the second links 23 are bent and stretched, and the movable platen 13 moves forward or backward with respect to the toggle support 15. The mold clamping motor 25 is directly connected to the motion conversion mechanism 26. However, the mold clamping motor 25 may be connected to the motion conversion mechanism 26 via a belt, a pulley, or the like.

The motion conversion mechanism 26 converts a rotary motion of the mold clamping motor 25 into a linear motion of the crosshead 21. The motion conversion mechanism 26 includes a screw shaft and a screw nut which is screwed to the screw shaft. A ball or a roller may be interposed between the screw shaft and the screw nut.

The mold clamping unit 10 performs a mold closing process, a mold clamping process, a mold opening process, or the like under the control of the controller 90.

In the mold closing process, the mold clamping motor 25 is driven to move the crosshead 21 forward to a mold closing completion position at a set speed. Accordingly, the movable platen 13 moves forward and the movable mold 33 comes into contact with the stationary mold 32. For example, a position or speed of the crosshead 21 is detected using an encoder 25a of the mold clamping motor 25 or the like. The encoder 25a detects the rotation of the mold clamping motor 25 and sends signals indicating the detection results to the controller 90.

In the mold clamping process, the mold clamping motor 25 is further driven to further move the crosshead 21 forward from the mold closing completion position to a mold clamping position, and thus, a mold clamping force is generated. When the mold is clamped, a cavity space 34 is formed between the movable mold 33 and the stationary mold 32, and the cavity space 34 is filled with a liquid molding material by the injection unit 40. The filled molding material is solidified, and thus, a molding product is obtained. A plurality of cavity spaces 34 may be provided, and in this case, a plurality of molding products may be simultaneously obtained.

In the mold opening process, the mold clamping motor 25 is driven to move the crosshead 21 backward to a mold opening completion position at a set speed. Accordingly, the movable platen 13 moves backward, and the movable mold 33 is separated from the stationary mold 32. Thereafter, the ejector unit 50 ejects the molding product from the movable mold 33.

In addition, the mold clamping unit 10 of the present embodiment has the mold clamping motor 25 as a drive source. However, the mold clamping unit 10 may have a hydraulic cylinder instead of the mold clamping motor 25. In addition, the mold clamping unit 10 may have a linear motor for opening and closing a mold and may have an electromagnet of clamping a mold.

The ejector unit 50 ejects the molding product from the mold unit 30. The ejector unit 50 includes an ejector motor 51, a motion conversion mechanism 52, and an ejector rod 53.

The ejector motor 51 is attached to the movable platen 13. The ejector motor 51 is directly connected to the motion conversion mechanism 52. However, the ejector motor 51 may be connected to the motion conversion mechanism 52 via a belt, a pulley, or the like.

The motion conversion mechanism 52 converts a rotary motion of the ejector motor 51 into a linear motion of the ejector rod 53. The motion conversion mechanism 52 includes a screw shaft and a screw nut which is screwed to the screw shaft. A ball or a roller may be interposed between the screw shaft and the screw nut.

The ejector rod 53 can move forward or backward through a through-hole of the movable platen 13. A front end portion of the ejector rod 53 comes into contact with a movable member 35 which is disposed to be movable forward or backward inside the movable mold 33. The front end portion of the ejector rod 53 may be connected to the movable member 35 or may not be connected to the movable member 35.

The ejector unit 50 performs an ejection process under the control of the controller 90.

In the ejection process, the ejector motor 51 is driven to move the ejector rod 53 forward at a set speed, and thus, the movable member 35 moves forward and the molding product is ejected. Thereafter, the ejector motor 51 is driven to move the ejector rod 53 backward at a set speed, and thus, the movable member 35 moves backward to an original position. For example, a position or speed of the ejector rod 53 is detected using an encoder 51a of the ejector motor 51. The encoder 51a detects the rotation of the ejector motor 51 and sends signals indicating the detection results to the controller 90.

Next, the injection unit 40 is described. Different from the descriptions of the mold clamping unit 10, in descriptions of the injection unit 40, a movement direction (left direction in Figs. 1 and 2) of a screw 43 during filling is referred to as a front side, and a movement direction (right direction in Figs. 1 and 2) of the screw 43 during plasticizing is referred to as a rear side.

The injection unit 40 is installed on a slide base Sb which is movable forward or backward with respect to the frame Fr, and is movable forward or backward with respect to the mold unit 30. The injection unit 40 comes into contact with the mold unit 30, and fills the cavity space 34 inside the mold unit 30 with the molding material. The molding material filling the cavity space 34 is cooled and solidified, and thus, a molding product is obtained. For example, the injection unit 40 includes a cylinder 41, a nozzle 42, the screw 43, a cooler 44, a plasticizing motor 45, an injection motor 46, a pressure detector 47, a heater 48, and a temperature detector 49.

The cylinder 41 heats the molding material which is supplied from a supply port 41a to the inner portion of the cylinder 41. The supply port 41a is formed on the rear portion of the cylinder 41. The cooler 44 such as a water cooling cylinder is provided on the outer periphery of the rear portion of the cylinder 41. A heater 48 such as a band heater and the temperature detector 49 are provided on the outer periphery of the cylinder 41 on the front side of the cooler 44.

The cylinder 41 is divided into a plurality of zones in an axial direction (right and left directions in Figs. 1 and 2) of the cylinder 41. The heater 48 and the temperature detector 49 are provided in each zone. The controller 90 controls the heater 48 such that a detection temperature of the temperature detector 49 for each zone becomes a set temperature.

The nozzle 42 is provided on the front end portion of the cylinder 41 and presses the mold unit 30. The heater 48 and the temperature detector 49 are provided on the outer periphery of the nozzle 42. The controller 90 controls the heater 48 such that a detection temperature of the nozzle 42 becomes a set temperature.

The screw 43 is disposed in the cylinder 41 so as to be rotatable and movable forward or backward. If the screw 43 rotates, the molding material is fed forward along spiral grooves of the screw 43. The molding material is gradually melted by heat of the cylinder 41 while being fed forward. The liquid molding material is fed to the front portion of the screw 43 and is accumulated in the front portion of the cylinder 41, and thus, the screw 43 moves backward. Thereafter, if the screw 43 moves forward, the molding material in front of the screw 43 is injected from the nozzle 42 and fills the inside of the mold unit 30.

The plasticizing motor 45 rotates the screw 43.

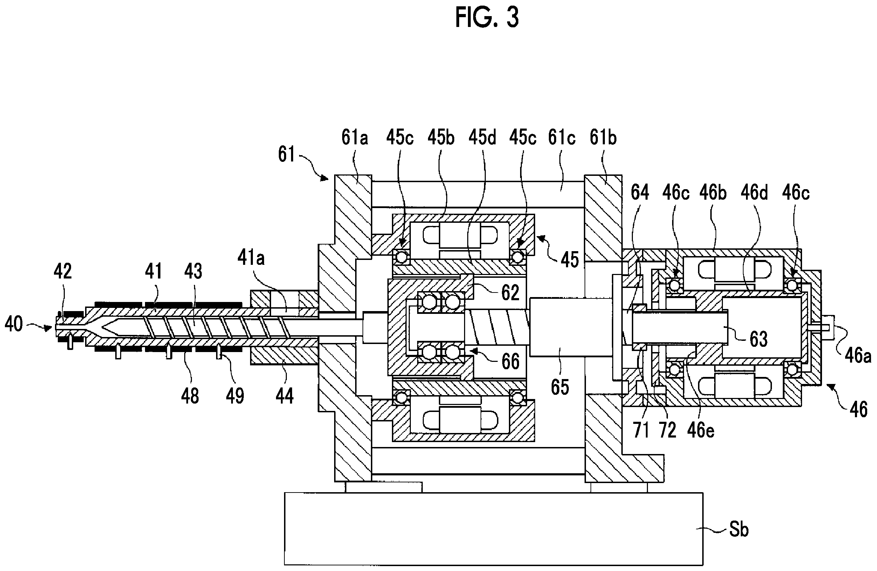

The injection motor 46 moves the screw 43 backward. The rotary motion of the injection motor 46 is converted into the linear motion of the screw 43 by the motion conversion mechanism. The motion conversion mechanism includes a screw shaft 64 (refer to Figs. 3 to 5) and a screw nut 65 (refer to figs. 3 to 5) which is screwed to the screw shaft 64. A ball or a roller may be interposed between the screw shaft 64 and the screw nut 65.

The pressure detector 47 is provided on a transmission path between the injection motor 46 and the screw 43 and detects a load applied to the pressure detector 47. The pressure detector 47 sends signals indicating the detection results to the controller 90. The detection results of the pressure detector 47 are used to control or monitor a pressure received by the screw 43 from the molding material, a back pressure with respect to the screw 43, a pressure applied from the screw 43 to the molding material, or the like.

The injection unit 40 performs a filling process, a holding pressure process, a plasticizing process, or the like under the control of the controller 90.

In the filling process, the injection motor 46 is driven to move the screw 43 forward at a set speed, and the cavity space 30 inside the mold unit 34 is filled with the liquid molding material accumulated in front of the screw 43. For example, a position or speed of the screw 43 is detected using an encoder 46a of the injection motor 46. The encoder 46a detects the rotation of the injection motor 46 and sends signals indicating the detection results to the controller 90. If the position of the screw 43 reaches a set position, switching from the filling process to the holding pressure process (so called V/P switching) is performed. The set speed of the screw 43 may be changed according to the position of the screw 43, the time, or the like.

Moreover, in the filling process, after the position of the screw 43 reaches the set position, the screw 43 may temporarily stop at the predetermined position, and thereafter, the V/P switching may be performed. Immediately before the V/P switching, instead of stopping the screw 43, the screw 43 may move forward or may move backward at a very slow speed.

In the holding pressure process, the injection motor 46 is driven to press the screw 43 forward at a set pressure, and a pressure is applied to the molding material inside the mold unit 30. Accordingly, insufficient molding materials caused by cooling shrinkage can be replenished. For example, the pressure of the molding material is detected using the pressure detector 47. The pressure detector 47 sends signals indicating the detection results to the controller 90.

In the holding pressure process, the molding material inside the cavity space 34 is gradually cooled, and when the holding pressure process is completed, the inlet of the cavity space 34 is closed by the solidified molding material. This state is referred to as a gate seal, and a backflow of the molding material from the cavity space 34 is prevented. After the holding pressure process, a cooling process starts. In the cooling process, solidification of the molding material inside the cavity space 34 is performed. In order to shorten a molding cycle, the plasticizing process may be performed during the cooling process.

In the plasticizing process, the plasticizing motor 45 is driven to rotate the screw 43 at a set rotating speed and the screw 43 feeds the molding material forward along the spiral grooves of the screw 43. According to this, the molding material is gradually melted. The screw 43 moves backward as the liquid molding material is fed to the front side of the screw 43 and is accumulated in front of the cylinder 41. For example, the rotating speed of the screw 43 is detected using an encoder 45a of the plasticizing motor 45. The encoder 45a sends signals indicating the detection results to the controller 90.

In the plasticizing process, in order to restrict an abrupt backward movement of the screw 43, the injection motor 46 may be driven so as to apply a set back pressure to the screw 43. For example, the back pressure with respect to the screw 43 is detected using the pressure detector 47. The pressure detector 47 sends signals indicating the detection results to the controller 90. If the screw 43 moves backward to the set position and a predetermined amount of the molding materials is accumulated in front of the screw 43, the plasticizing process ends.

Moreover, in the present embodiment, the injection unit 40 is an inline-screw type injection unit. However, the injection unit 40 may be a preplasticizing type injection unit. The preplasticizing type injection unit supplies molten molding material inside a plasticizing cylinder to an injection cylinder and injects the molding material from the injection cylinder into the mold unit. A screw is disposed to be rotatable and movable forward or backward in the plasticizing cylinder and a plunger is disposed to be movable forward or backward in the injection cylinder.

As shown in Figs. 1 and 2, the controller 90 includes a Central Processing Unit (CPU) 91, a recording medium 92 such as a memory, an input interface 93, and an output interface 94. The controller 90 executes a program stored in the recording medium 92 using the CPU 91 to perform various controls. In addition, the controller 90 receives signals from the outside using an input interface 93 and sends the signals to the outside using the output interface 94.

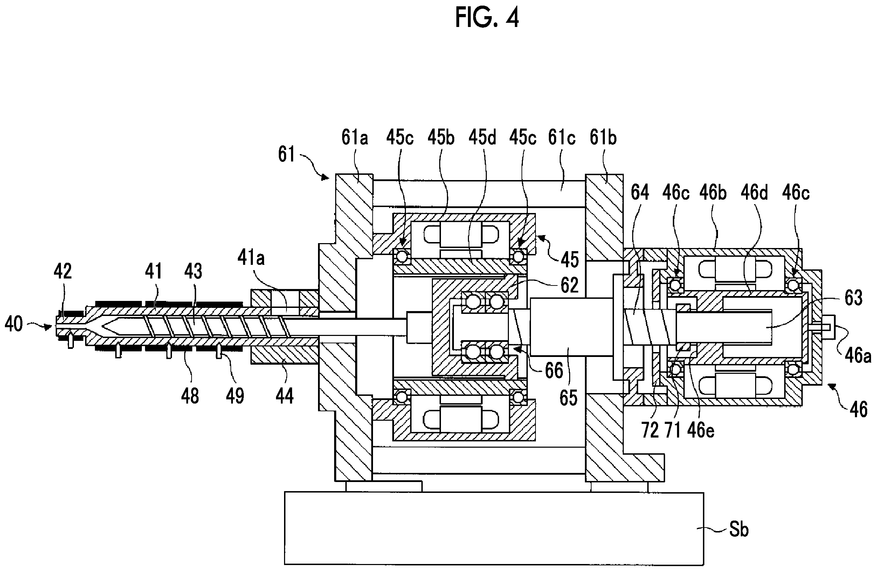

Fig. 3 is a view showing a state when filling is completed by the injection unit according to the embodiment. Fig. 4 is a view showing a state when plasticizing is completed by the injection unit according to the embodiment. The injection unit 40 includes an injection frame 61, a plasticizing drive shaft 62, an injection drive shaft 63, or the like in addition to the cylinder 41, thescrew43, the plasticizing motor 45, the injection motor 46, or the like.

The injection frame 61 is fixed to the slide base Sb. The cylinder 41, the plasticizing motor 45, the injection motor 46, and the screw nut 65 which is screwed to the screw shaft 64 of the injection drive shaft 63 are fixed to the injection frame 61.

For example, the injection frame 61 includes a front support 61a, a rear support 61b which is provided behind the front support 61a, and a connection rod 61c which connects the front support 61a and the rear support 61b to each other. The cylinder 41 and the plasticizing motor 45 are fixed to the front support 61a. The injection motor 46 and the screw nut 65 are fixed to the rear support 61b.

The plasticizing motor 45 includes a stator 45b which is fixed to the injection frame 61, bearings 45c which are held in the stator 45b, and a rotor 45d which is rotatably supported by the bearings 45c. The plasticizing drive shaft 62 which rotates and moves linearly by the rotary motion of the rotor 45d is disposed on the inner peripheral side of the rotor 45d.

The plasticizing drive shaft 62 is splined to the rotor 45d of the plasticizing motor 45 and is rotationally restrained by the rotor 45d. Specifically, the plasticizing drive shaft 62 includes a plurality of keys at intervals in a circumferential direction on the outer periphery and the rotor 45d includes a plurality of key grooves into which the plurality of keys are inserted in a slidable manner on the inner periphery. In addition, one key or one key groove may be provided.

If the plasticizing motor 45 is driven, the plasticizing drive shaft 62 or the screw 43 rotates. Accordingly, the molding material is fed forward along the spiral grooves of the screw 43. The screw 43 or the plasticizing drive shaft 62 moves backward as the molding material is fed to the front side of the screw 43 and accumulated in front of the cylinder 41. Accordingly, if the plasticizing motor 45 is driven, and the plasticizing drive shaft 62 moves backward while rotating.

The injection motor 46 includes a stator 46b which is fixed to the injection frame 61, bearings 46c which are held in the stator 46b, and a rotor 46d which is rotatably supported by the bearings 46c. The injection drive shaft 63 which rotates and moves linearly by the rotary motion of the rotor 46d is disposed on the inner peripheral side of the rotor 46d.

The injection drive shaft 63 is splined to the rotor 46d of the injection motor 46 and is rotationally restrained by the rotor 46d. In the injection drive shaft 63 includes the screw shaft 64 and the screw nut 65 screwed to the screw shaft 64 is fixed to the injection frame 61. Accordingly, if the injection motor 46 is driven, the injection drive shaft 63 moves forward while rotating.

The front end portion of the injection drive shaft 63 is rotatably supported by a bearing 66 by which the plasticizing drive shaft 62 is held. An outer ring of the bearing 66 is fixed to the inner peripheral side of the tubular plasticizing drive shaft 62 and an inner ring of the bearing 66 is fixed to the outer peripheral side of the injection drive shaft 63. Accordingly, it is possible to prevent transmission of the rotary motion from the injection drive shaft 63 to the plasticizing drive shaft 62. If the injection motor 46 is driven and the injection drive shaft 63 moves forward or backward while rotating, the plasticizing drive shaft 62 or the screw 43 moves forward or backward.

A stopper 71 is provided on the outer peripheral portion of the injection drive shaft 63. The stopper 71 protrudes from the outer periphery of the injection drive shaft 63 toward the outside in the radial direction. For example, the stopper 71 is formed in a ring shape. The stopper 71 is formed separately from the injection drive shaft 63 and is attached to the outer peripheral portion of the injection drive shaft 63. However, the stopper 71 may be integrally formed of the same material as that of the injection drive shaft 63.

The stopper 71 rotates and moves linearly along with the injection drive shaft 63, abuts on a step 46e provided on the inner peripheral portion of the rotor 46d, and thus, restricts the movement of the injection drive shaft 63. The injection drive shaft 63 cannot move backward from a position at which the stopper 71 positioned on the front side of the step 46e abuts on the step 46e. Accordingly, it is possible to protect the encoder 46a positioned on the rear side thereof.

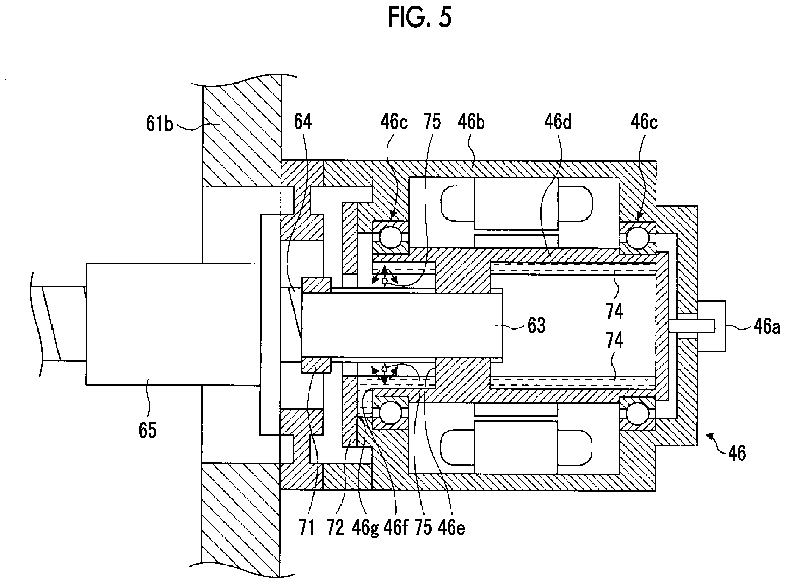

Fig. 5 is an enlarged view of a portion in Fig. 3. A fluid layer 74 of a lubricant and splash 75 of the lubricant which are not shown in Fig. 3 are shown in Fig. 5. In Fig. 5, arrows indicate an aspect in which splash 75 collides with the fluid layer 74 and is rebounded.

If the injection motor 46 is driven, the injection drive shaft 63 linearly moves with respect to the rotor 46d while the rotor 46d and the injection drive shaft 63 come into contact with each other in a tangential direction of the rotary motion. The lubricant which lubricates the injection drive shaft 63 and the rotor 46d is attached to the outer periphery of the injection drive shaft 63. As the lubricant, oil or grease is used.

The injection drive shaft 63 is rotated, and thus, the lubricant attached to the outer periphery of the injection drive shaft 63 is scattered by a centrifugal force.

Accordingly, the injection unit 40 includes a return member 72 for allowing the lubricant separated from the injection drive shaft 63 to be close to the injection drive shaft 63. By allowing the lubricant separated from the injection drive shaft 63 to be close to the injection drive shaft 63, the lubricant is returned to the injection drive shaft 63, and thus, it is possible to decrease an amount of the lubricant used so as to lubricate the injection drive shaft 63 and the rotor 46d. In addition, it is possible to prevent the lubricant from leaking to an unintended location.

For example, the return member 72 is fixed to an opening edge portion of the tubular stator 46b and collects the lubricant inside the stator 46b and forms the fluid layer 74 including the lubricant. If the splash 75 of the lubricant separated from the injection drive shaft 63 collides with the fluid layer 74, rebound is caused by the impact, and thus, the lubricant is returned to the injection drive shaft 63. The lubricant returned to the injection drive shaft 63 may include both the lubricant returned from the fluid layer 74 and the splash 75 which collides with the fluid layer 74.

For example, the return member 72 is configured of a plate perpendicular to the center axis of the stator 46b and accommodates the lubricant inside the stator 46b. Accordingly, it is possible to prevent the lubricant from being scrapped out from the inside of the stator 46b. In addition, the lubricant is collected inside the stator 46b, and thus, the fluid layer 74 can be formed.

The return member 72 protrudes toward the inside in the radial direction from an opening edge 46g (refer to Fig. 5) of the tubular stator 46b. The fluid layer 74 is formed inside the stator 46b, and thus, the lubricant is returned to the injection drive shaft 63 by the rebound when the splash 75 collides with the fluid layer 74.

In addition, the return member 72 protrudes toward the inside in the radial direction from an opening edge 46f (refer to Fig. 5) of the tubular rotor 46d and accommodates the lubricant inside the rotor 46d. Accordingly, it is possible to prevent the lubricant from being scrapped out from the inside of the rotor 46d. In addition, the lubricant is collected inside the rotor 46d, and thus, the fluid layer 74 can be formed.

In addition, the return member 72 of the present embodiment protrudes toward the inside in the radial direction from the opening edge 46f for the tubular rotor 46d. However, the return member 72 may not protrude.

In addition, the return member 72 may be configured of a plate which is inclined to the center line of the stator 46b so as to cause the lubricant moving from the inside of the stator 46b toward the opening portion of the stator 46b to flow in a direction approaching the injection drive shaft 63, that is, toward the inside in the radial direction. The lubricant separated from the injection drive shaft 63 can be delivered to the injection drive shaft 63.

The return member 72 is provided on the outside in the radial direction from the movement path of the ring-shaped stopper 71 so as not to obstruct the movement of the ring-shaped stopper 71. The stopper 71 may move between the position positioned on the front side of the return member 72 and the position positioned on the rear side of the return member 72 according to the movement of the injection drive shaft 63.

The return member 72 may return the lubricant to the injection drive shaft 63 via the stopper 71. The stopper 71 protrudes toward the outside in the radial direction from the outer periphery of the injection drive shaft 63, and thus, the stopper 71 is positioned closer to the return member 72 than the injection drive shaft 63 and easily receives the lubricant from the return member 72 when the stopper 71 passes through the return member 72.

The return member 72 may be formed in a ring shape and may enclose the outer periphery of the injection drive shaft 63 over the entire periphery in the circumferential direction. This is because the lubricant is radially scattered by a centrifugal force from the outer periphery of the injection drive shaft 63. The lubricant which is radially scattered is attached to the entire periphery in the circumferential direction of the inner periphery of the stator 46b or the rotor 46d.

In addition, the lubricant attached to the inner periphery of the stator 46b or the rotor 46d is easily collected in the lower portion of the internal space of the stator 46b or the rotor 46d due to gravity. Accordingly, the return member 72 may be configured of a lower half portion of the return member 72 and may not include an upper half portion thereof. In this case, the return member 72 may lift up the lubricant collected in the lower portion of the internal space of the stator 46b or 46d to return the lubricant to the injection drive shaft 63.

In the present embodiment, the rotor 46d of the injection motor 46 corresponds to a rotating member described in the claims, the stator 46b of the injection motor 46 corresponds to a fixation member described in the claims, and the injection drive shaft 63 corresponds to a drive shaft described in the claims, respectively. The injection drive shaft 63 is splined to the rotor 46d of the injection motor 46. However, the injection drive shaft 63 may be splined to a rotating member which is provided to be offset from the injection motor 46. The rotary motion of the injection motor 46 is transmitted to the rotating member via a belt, a pulley, or the like.

In addition, the rotor 45d of the plasticizing motor 45 corresponds to a rotating member described in the claims, the stator 45b of the plasticizing motor 45 corresponds to a fixation member described in the claims, and the plasticizing drive shaft 62 corresponds to a drive shaft described in the claims, respectively. In this case, the return member which causes the lubricant separated from the plasticizing drive shaft 62 to be close to the plasticizing drive shaft 62 is provided in front of and/or behind the rotor 45d. The return member is formed similarly to the return member 72 shown in Figs. 3 to 5. A stopper (not shown) is provided on the outer peripheral portion of the plasticizing drive shaft 62. This stopper rotates and moves linearly along with the plasticizing drive shaft 62, abuts on a step (not shown) provided on the inner peripheral portion of the rotor 45d, and thus, restricts the movement of the plasticizing drive shaft 62. The stopper may restrict the forward movement of the plasticizing drive shaft 62 or may restrict the backward movement of the plasticizing drive shaft 62.

The plasticizing drive shaft 62 is splined to the rotor 45d of theplasticizingmotor45. However, the plasticizing drive shaft 62 may be splined to a rotating member which is provided to be offset from the plasticizing motor 45. The rotary motion of the plasticizing motor 45 is transmitted to the rotating member via a belt, a pulley, or the like.

Hereinbefore, embodiments of the injection molding machine are described. However, the present invention is not limited to the embodiments or the like, and various modifications and improvements can be applied within the scope of the present invention described in the claims.

The present invention is also applied to the ejector unit 50. The ejector motor 51 includes a stator which is fixed to the movable platen 13, a bearing which is held in the stator, and a rotor which is rotatably supported by the bearing. An ejector drive shaft which rotates and moves linearly by the rotary motion of the rotor is disposed on the inner peripheral side of the rotor.

The ejector drive shaft is splined to the rotor of the ejector motor 51 and is rotationally restrained by the rotor. The ejector drive shaft includes a screw shaft of the motion conversion mechanism 52 and a screw nut screwed to the screw shaft is fixed to the movable platen 13. Accordingly, if the ejector motor 51 is driven, the ejector drive shaft moves forward while rotating.

The front end portion of the ejector drive shaft is rotatably supported by a bearing held by a bearing holder. Therefore, it is possible to prevent the rotary motion from being transmitted from the ejector drive shaft to the bearing holder. If the ejector motor 51 is driven and the ejector drive shaft moves backward while rotating, the bearing holder moves backward. The rear end portion of the ejector rod 53 is connected to the bearing holder and the ejector rod 53 moves backward along with the bearing holder.

In this case, the rotor of the ejector motor 51 corresponds to a rotating member described in the claims, the stator of the ejector motor 51 corresponds to a fixation member described in the claims, and the ejector drive shaft corresponds to a drive shaft described in the claims, respectively. The return member which causes the lubricant separated from the ejector drive shaft to be close to the ejector drive shaft is provided in front of the rotor of the ejector motor 51. The return member is formed similarly to the return member 72 shown in Figs. 3 to 5. A stopper may be provided on the outer peripheral portion of the ejector drive shaft. This stopper rotates and moves linearly along with the ejector drive shaft, abuts on a step provided on the inner peripheral portion of the rotor, and thus, restricts the movement of the ejector drive shaft. The ejector drive shaft cannot move backward from a position at which the stopper positioned on the front side of the step abuts on the step.

The ejector drive shaft may be splined to a rotating member which is provided to be offset from the ejector motor 51 instead of being splined to the rotor of the ejector motor 51. The rotary motion of the ejector motor 51 is transmitted to the rotating member via a belt, a pulley, or the like.

The present invention is also applied to the mold clamping unit 10. The mold clamping motor 25 includes a stator which is fixed to the toggle support 15, a bearing which is held in the stator, and a rotor which is rotatably supported by the bearing. A mold clamping drive shaft which rotates and moves linearly in linear motion by the rotary motion of the rotor is disposed on the inner peripheral side of the rotor.

The mold clamping drive shaft is splined to the rotor of the mold clamping motor 25 and is rotationally restrained by the rotor. The mold clamping drive shaft includes a screw shaft of the motion conversion mechanism 26 and a screw nut screwed to the screw shaft is fixed to the toggle support 15. Accordingly, if the mold clamping motor 25 is driven, the mold clamping drive shaft moves backward while rotating.

The front end portion of the mold clamping drive shaft is rotatably supported by a bearing held by the crosshead 21. Therefore, it is possible to prevent the rotary motion from being transmitted from the mold clamping drive shaft to the crosshead 21. If the mold clamping motor 25 is driven and the mold clamping drive shaft moves backward while rotating, the crosshead 21 moves backward and the movable platen 13 moves backward.

In this case, the rotor of the mold clamping motor 25 corresponds to a rotating member described in the claims, the stator of the mold clamping motor 25 corresponds to a fixation member described in the claims, and the mold clamping drive shaft corresponds to a drive shaft described in the claims, respectively. The return member which causes the lubricant separated from the mold clamping drive shaft to be close to the mold clamping drive shaft is provided in front of the rotor of the mold clamping motor 25. The return member is formed similarly to the return member 72 shown in Figs. 3 to 5. A stopper may be provided on the outer peripheral portion of the mold clamping drive shaft. This stopper rotates and moves linearly along with the mold clamping drive shaft, abuts on a step provided on the inner peripheral portion of the rotor of the mold clamping motor 25, and thus, restricts the movement of the mold clamping drive shaft. The mold clamping drive shaft cannot move backward from a position at which the stopper positioned on the front side of the step abuts on the step.

The mold clamping drive shaft may be splined to a rotating member which is provided to be offset from the mold clamping motor 25 instead of being splined to the rotor of the mold clamping motor 25. The rotary motion of the mold clamping motor 25 is transmitted to the rotating member via a belt, a pulley, or the like.

The mold clamping unit 10 of the above-described embodiment is a horizontal type mold clamping unit in which the mold opening and closing directions are horizontal directions. However, the mold clamping unit 10 may be a vertical type mold clamping unit in which the mold opening and closing directions are vertical directions . The vertical type mold clamping unit includes a lower platen, an upper platen, a toggle support, a tie bar, a toggle mechanism, a mold clamping motor, or the like. Any one of the lower platen and the upper platen is used as a stationary platen and the other is used as a movable platen . A lower mold is attached to the lower platen and an upper mold is attached to the upper platen. The lower mold and the upper mold configure the mold unit. The lower mold may be attached to the lower platen via a rotary table. The toggle support is disposed below the lower platen. The toggle mechanism is disposed between the toggle support and the lower platen and lifts or lowers the lower platen relative to the toggle support. The mold clamping motor operates the toggle mechanism. The tie bar is parallel to the vertical direction, penetrates the lower platen, and connects the upper platen and the toggle support to each other.

### Brief Description of the Reference Symbols

- 10:: mold clamping unit
- 20:: toggle mechanism
- 21:: crosshead
- 25:: mold clamping motor
- 40:: injection unit
- 43:: screw
- 45:: plasticizing motor
- 45d:: rotor
- 46:: injection motor
- 46d:: rotor
- 46e:: step
- 50:: ejector unit
- 51:: ejector motor
- 53:: ejector rod
- 62:: plasticizing drive shaft
- 63:: injection drive shaft
- 71:: stopper
- 72:: return member
- 74:: fluid layer of lubricant
- 75:: splash of lubricant
- 90:: controller

## Claims

1. An injection molding machine, comprising:
a tubular rotating member (46d);
a drive shaft (63) which is disposed on an inner peripheral side of the rotating member (46d) and rotates and moves linearly by a rotary motion of the rotating member (46d);
a return member (72) which causes a lubricant separated from the drive shaft (63) to be close to the drive shaft (63); **characterised in that** the injection molding machine further comprises:
a stopper (71) which is provided on an outer peripheral portion of the drive shaft (63), rotates and moves linearly along with the drive shaft (63), and abuts on a step provided on an inner peripheral portion of the rotating member (46d) to restrict a movement of the drive shaft (63),
wherein the stopper (71) moves between a position on a front side of the return member (72) and a position on a rear side of the return member (72) according to the movement of the drive shaft (63).

2. The injection molding machine according to claim 1, further comprising:
a tubular fixation member which holds a bearing (46c) which rotatably supports the rotating member (46d),
wherein the rotating member (46d) is disposed on an inner peripheral side of the fixation member, and
wherein the return member (72) accommodates the lubricant inside the fixation member.

3. The injection molding machine according to claim 1 or 2,
wherein the return member returns the lubricant to the drive shaft via the stopper (71).

4. The injection molding machine according to any one of claims 1 to 3, further comprising:
a motor which includes a stator (46b), a bearing (46c) held in the stator (46b), and a rotor rotatably supported by the bearing (46c),
wherein the rotating member (46c) includes the rotor.

## Patentansprüche

1. Spritzgießmaschine, umfassend:
ein röhrenförmiges Drehelement (46d);
eine Antriebswelle (63), die auf einer Innenumfangsseite des Drehelements (46d) angeordnet ist und sich durch eine Drehbewegung des Drehelements (46d) dreht und linear bewegt;
ein Rückführelement (72), das bewirkt, dass sich ein Schmiermittel, das von der Antriebswelle (63) getrennt ist, nahe an der Antriebswelle (63) befindet;
**dadurch gekennzeichnet, dass** die Spritzgießmaschine weiter umfasst:
ein Anschlagelement (71), das auf einem Außenumfangsabschnitt der Antriebswelle (63) vorgesehen ist, sich zusammen mit der Antriebswelle (63) dreht und linear bewegt und auf einer Stufe anschlägt, die auf einem Innenumfangsabschnitt des Drehelements (46d) vorgesehen ist, um eine Bewegung der Antriebswelle (63) zu begrenzen,
wobei sich das Anschlagelement (71) gemäß der Bewegung der Antriebswelle (63) zwischen einer Position auf einer Stirnseite des Rückführelements (72) und einer Position auf einer Rückseite des Rückführelements (72) bewegt.

2. Spritzgießmaschine nach Anspruch 1, weiter umfassend:
ein röhrenförmiges Befestigungselement, das ein Lager (46c) hält, das das Drehelement (46d) drehbar trägt,
wobei das Drehelement (46d) auf einer Innenumfangsseite des Befestigungselements angeordnet ist und
wobei das Rückführelement (72) das Schmiermittel im Inneren des Befestigungselements aufnimmt.

3. Spritzgießmaschine nach Anspruch 1 oder 2,
wobei das Rückführelement das Schmiermittel über das Anschlagelement (71) zur Antriebswelle zurückführt.

4. Spritzgießmaschine nach einem der Ansprüche 1 bis 3, weiter umfassend:
einen Motor, der einen Stator (46b), ein Lager (46c), das im Stator (46b) gehalten wird, und einen Rotor, der durch das Lager (46c) drehbar getragen wird, enthält,
wobei das Drehelement (46c) den Rotor enthält.

## Revendications

1. Une machine de moulage par injection comprenant :
un élément rotatif tubulaire (46d) ;
un arbre d'entraînement (63) qui est disposé sur un côté périphérique interne de l'élément rotatif (46d) et tourne et se déplace de manière linéaire grâce au mouvement rotatif de l'élément rotatif (46d) ;
un élément de retour (72) qui amène un lubrifiant séparé de l'arbre d'entraînement (63) à être à proximité de l'arbre d'entraînement (63) ;
**caractérisée en ce que** la machine de moulage par injection comprend en outre :
une butée (71) qui est prévue sur une partie périphérique externe de l'arbre d'entraînement (63), tourne et se déplace de manière linéaire conjointement avec l'arbre d'entraînement (63) et vient en butée sur un gradin prévu sur une partie périphérique interne de l'élément rotatif (46d) pour limiter un mouvement de l'arbre d'entraînement (63),
dans laquelle la butée (71) se déplace entre une position sur un côté avant de l'élément de retour (72) et une position sur un côté arrière de l'élément de retour (72) selon le mouvement de l'arbre d'entraînement (63).

2. La machine de moulage par injection selon la revendication 1, comprenant en outre :
un élément de fixation tubulaire qui maintient un palier (46c) qui supporte, en rotation, l'élément rotatif (46d),
dans laquelle l'élément rotatif (46d) est disposé sur un côté périphérique interne de l'élément de fixation, et
dans laquelle l'élément de retour (72) loge le lubrifiant à l'intérieur de l'élément de fixation.

3. La machine de moulage par injection selon la revendication 1 ou 2, dans laquelle l'élément de retour ramène le lubrifiant à l'arbre d'entraînement via la butée (71).

4. La machine de moulage par injection selon l'une quelconque des revendications 1 à 3, comprenant en outre :
un moteur qui comprend un stator (46b), un palier (46c) maintenu dans le stator (46b), et un rotor supporté, en rotation, par le palier (46c),
dans laquelle l'élément rotatif (46c) comprend le rotor.
